# EUROPÄISCHE PATENTSCHRIFT

(11) **EP 2 924 401 B1**
(45) Veröffentlichungstag und Bekanntmachung des Hinweises auf die Patenterteilung: **28.12.2016**
(21) Anmeldenummer: 14162219.1
(22) Anmeldetag: 28.03.2014
(51) Int. Cl.: G01G 21/28

(54) **Roboterbetätigte Türöffnungsvorrichtung für ein Windschutzgehäuse einer Analysenwaage**
Robot-actuated door-opening device for a draft protection housing of an analytical scale
Dispositif d'ouverture de porte robotisée d'un boîtier de protection contre les courants d'air d'une balance analytique

(43) Veröffentlichungstag der Anmeldung: 30.09.2015
(73) Patentinhaber: Mettler-Toledo GmbH, 8606 Greifensee (CH)
(72) Erfinder: Weber, René, 8133 Esslingen (CH)

(56) Entgegenhaltungen:
- EP-A1- 1 912 047
- EP-A2- 0 216 035
- WO-A1-2014/038969
- US-A- 5 606 153

## Beschreibung

Die Erfindung betrifft eine durch einen Roboter zu betätigende Vorrichtung zum Öffnen und Schliessen einer Windschutzgehäusetüre einer im Rahmen eines automatisierten Laborsystems verwendbaren Analysen- und Mikrowaagen. Die Erfindung betrifft ausserdem ein mit einem Roboter implementierbares Verfahren zum Öffnen und Schliessen der erfindungsgemässen Windschutzgehäusetüre.

Automatisierte Laborsysteme, in welchen Wägevorgänge mithilfe von Robotern ausgeführt werden, sind aus dem Stand der Technik bekannt. In der Regel werden solche Systeme dort eingesetzt, wo Wägungen in grossen Serien standardmässig ausgeführt werden, wobei die Automation Arbeitskosten spart und die Zuverlässigkeit erhöht.

Ein typisches Beispiel ist die Wägung von Filtern, welche für Luftverschmutzungstests z.B. bei der Prüfung von Dieselmotoren verwendet werden. Dabei werden die zu prüfenden Abgase durch ein Filter geleitet, welches Feststoffpartikel, insbesondere Russ, zurückhält. Die Filter, welche individuell gekennzeichnet und verfolgbar sind, werden zuerst im Neuzustand gewogen, und das Neugewicht jedes Filters wird in einer Datenbank registriert. Dann werden die Filter für die Partikelerfassung im Testgerät eingesetzt und anschliessend wieder gewogen. Das Nettogewicht der vom Filter gesammelten Verbrennungsrückstände ergibt sich sodann durch Subtraktion des Neugewichts vom Endgewicht.

Ein System für die Wägung von Filtern mithilfe eines Roboters wird z.B. in U.S. 5,606,153 beschrieben, wobei die kreisrunden, flachen Filter in Halteringen sitzen, welche eine Barcode-Identifizierung tragen. Auf einem vibrationsisolierten Wägetisch sind ein Dreharm-Roboter, eine Mikrowaage, eine elektrostatische Entladungsvorrichtung, ein die Filter enthaltendes Karussellmagazin sowie eine Zwischenparkiervorrichtung für den Haltering des jeweils zu wägenden Filters angeordnet. Um eine Wägung auszuführen, bringt der Roboter zunächst ein in einem Haltering sitzendes Filter aus dem Karussellmagazin zur Zwischenparkiervorrichtung, wo das Filter vom Haltering getrennt wird. Der Roboter transportiert das Filter ohne den Haltering weiter durch die elektrostatische Entladungsvorrichtung zur Mikrowaage, wobei die Funktionen der Waage - Türe öffnen und schliessen, Waage auf Null stellen, Wägeresultat registrieren und an Computer übermitteln, Türe erneut öffnen und schliessen - automatisch ablaufen und mit den Bewegungen des Roboters koordiniert sind. Das Filter wird zur Zwischenparkiervorrichtung zurückgebracht, in den Haltering eingesetzt, und der Haltering zusammen mit dem Filter wird wieder im Karussellmagazin abgelegt.

In dem vorstehend beschriebenen Wägerobotersystem wird eine handelsübliche Mikrowaage verwendet, welche die genannten normalerweise manuell betätigten Funktionen auch automatisch, d.h. aufgrund von Steuerbefehlen eines Computers, ausführen kann. Dabei wird allerdings in Kauf genommen, dass die für die ergonomischen Anforderungen eines manuellen Betriebs und für ein weites Feld von Anwendungen konzipierte Waage zum Teil nicht optimal auf die Bedürfnisse der automatisierten Filterwägung zugeschnitten ist. Insbesondere hat das Windschutzgehäuse in Standardausführung bei einer handelsüblichen Mikrowaage einen höheren Innenraum als für die Filterwägung notwendig ist. Durch eine gedrungenere Formgebung des Windschutzgehäuses könnte die Luftturbulenz beim Öffnen und Schliessen der Wägeraumtüre reduziert und damit die Einschwingzeit der Waage verkürzt werden. Ausserdem braucht das Windschutzgehäuse beim automatischen Betrieb der Waage nicht durchsichtig zu sein und kann somit aus Metall hergestellt werden, wodurch das Problem der elektrostatischen Aufladung beseitigt wird.

Ein von der Anmelderin entwickeltes Filterwägesystem, welches in Deutschland von der Firma Horiba unter dem Namen PWS ONEplus vertrieben wird, umfasst einen XYZ-Roboter, eine Mikrowaage, ein die Filter enthaltendes Magazingestell mit mehreren übereinanderliegenden Regalen, sowie einen Computer zur Steuerung der Anlage und zur Verarbeitung und Speicherung der Daten. Die flachen und kreisrunden Filter befinden sich in entsprechend geformten Dosen, welche eine Barcode-Identifikation tragen, wodurch das jeweils in der Dose liegende Filter individuell gekennzeichnet wird. Die Dosen haben nach unten eine runde Öffnung, deren Durchmesser kleiner ist als der Filterdurchmesser, jedoch gösser als der Waagschalendurchmesser der Mikrowaage. Für die Wägung wird die Dose über der Waagschale abgesenkt und auf den Boden des Wägeabteils gesetzt, wobei das Filter durch die Waagschale vom Dosenboden abgehoben wird. Somit muss das Filter für die Wägung nicht aus der Dose herausgenommen werden.

In diesem Filterwägesystem wird eine von der Anmeldefirma serienmässig hergestellte Mikrowaage verwendet, welche ein transparentes, zylindrisches Windschutzgehäuse aus Glas mit einer zylindrisch gewölbten und um die Zylinderachse drehbaren Schiebetüre besitzt, deren Antriebsmotor für das Öffnen und Schliessen durch Befehlssignale des Computers gesteuert wird. Bei diesem System wird zwar dank dem Konzept der Filterwägedosen das Problem der elektrostatischen Aufladung der Filter vermieden, aber das standardmässige Windschutzgehäuse ist wie beim vorhergehenden Beispiel höher als für die Filterwägung nötig wäre.

Um den Einwänden gegenüber der Verwendung eines standardmässigen Windschutzgehäuses Rechnung zu tragen, wurde bei der Anmelderin zunächst ein speziell auf die Filterwägedosen zugeschnittenes, flachgedrungenes Windschutzgehäuse in Metallbauweise entwickelt, jedoch unter Beibehaltung des elektromotorischen Türantriebs der Standardausführung. Dabei zeigte es sich jedoch, dass die Steuerung der Türbetätigung nicht genügend starr mit dem Bewegungsablauf des Roboters koordiniert werden kann, was zur Folge hat, dass sich die Windschutztüre in vereinzelten Fällen nicht oder zu spät öffnet, sodass der Roboterarm auf die geschlossene Windschutztüre stösst, wodurch das Filterwägesystem beschädigt werden kann.

Die vorliegende Erfindung hat deshalb zur Aufgabe, eine Türöffnungsvorrichtung für ein Waagenwindschutzgehäuse zu schaffen, welche den Gegebenheiten eines durch einen Roboter bedienten Filterwägesystems in optimaler Weise entspricht und sich gegenüber dem Stand der Technik durch eine einfache, kostengünstige Bauweise und zuverlässiges Funktionieren auszeichnet. In Anbetracht des vorhandenen Roboters kann auf den in der Standardausführung verwendeten Antriebsmotor und die elektronische Steuerung der Türöffnungsvorrichtung verzichtet werden und der Roboter kann auch zur Betätigung der Türöffnungsvorrichtung herangezogen werden.

Diese Aufgabe wird gelöst durch eine Türöffnungsvorrichtung für ein Windschutzgehäuse gemäss den Merkmalen des unabhängigen Anspruchs. Vorteilhafte Ausführungsformen und Einzelheiten der Türöffnungsvorrichtung werden in den abhängigen Ansprüchen dargestellt. Dabei beziehen sich Ausdrücke wie "oben", "unten", "horizontal", "vertikal" in den nachfolgenden Ausführungen immer auf die betriebsbereite Position des auf der Waage installierten Windschutzgehäuses.

Eine erfindungsgemässe Türöffnungsvorrichtung für ein Waagenwindschutzgehäuse mit vertikaler, seitlich angeordneter Beschickungsöffnung und mit einer vertikal verschiebbaren, die Beschickungsöffnung in der angehobenen Türposition freigebenden und in der abgesenkten Türposition verschliessenden Windschutztüre ist durch mechanische Einwirkung einer Aufnahmegabel eines Roboters betätigbar und umfasst einerseits ein mit der Türe verbundenes Türheberorgan mit einem Kraftangriffselement für eine vertikal aufwärts gerichtete, das Öffnen der Türe bewirkende Betätigungskraft, und andererseits einen von der Waage freistehenden Übertragungsmechanismus mit einem durch Einwirkung der Aufnahmegabel vertikal zwischen einer oberen und einer unteren Endposition beweglichen Krafteinleitungselement, mindestens einem mit dem Krafteinleitungselement gekoppelten und mit dem Kraftangriffselement koppelbaren Richtungswandlerelement, einer das Krafteinleitungselement in die obere Endposition ziehenden Rückstellfeder, sowie mit einer das Krafteinleitungselement in der unteren Endposition arretierenden Einrastfederklinke.

Zum Öffnen der Windschutztüre wird das Krafteinleitungselement durch die Aufnahmegabel gegen eine Rückstellkraft der Rückstellfeder nach unten gedrückt, wodurch das Richtungswandlerelement mit dem Kraftangriffselement in Eingriff gebracht und die das Öffnen der Türe bewirkende nach oben gerichtete Betätigungskraft erzeugt wird. Beim Erreichen der geöffneten Türposition wird der Übertragungsmechanismus durch das Einschnappen der Einrastfederklinke arretiert, sodass die Windschutztüre in der geöffneten Position verbleibt, während die Aufnahmegabel vom Krafteinleitungselement entfernt werden kann.

Zum Schliessen der Windschutztüre wird die Aufnahmegabel über dem Krafteinleitungselement in Stellung gebracht und die Arretierung des Übertragungsmechanismus wird durch seitliche Druckwirkung der Aufnahmegabel auf die Einrastfederklinke gelöst. Das von der Arretierung befreite Krafteinleitungselement wird durch das auf das Richtungswandlerelement wirkende Gewicht der Windschutztüre gegen die Aufnahmegabel gedrückt, worauf die Windschutztüre durch ihr Eigengewicht mit einer durch den Roboter kontrollierten Geschwindigkeit in die geschlossene Position bewegt wird. Nach Erreichen der geschlossenen Position der Windschutztüre wird das Krafteinleitungselement durch die Rückstellfeder vollends in die obere Endposition zurückgezogen, wodurch der Eingriff zwischen dem Richtungswandlerelement und dem Kraftangriffselement gelöst wird.

In einer bevorzugten Ausführungsform des erfindungsgemässen Windschutzgehäuses umfasst das mit der Windschutztüre verbundene Türheberorgan eine senkrecht ausgerichtete zweite Druckstange, welche an ihrem unteren Ende als Kraftangriffselement eine in einer zweiten Radgabel gelagerte zweite Wälzrolle trägt und mittels zweiten Gleitlagern in einer senkrechten Bohrung des Windschutzgehäuses axial geführt wird.

In einer weiteren bevorzugten Ausführungsform umfasst der Übertragungsmechanismus ein Basisgehäuse und das Krafteinleitungselement ist als senkrecht ausgerichtete erste Druckstange ausgebildet, welche an ihrem oberen Ende einen durch die Aufnahmegabel beaufschlagbaren Knauf und an ihrem unteren Ende eine in einer ersten Radgabel gelagerte erste Wälzrolle trägt und mittels ersten Gleitlagern in einer senkrechten Bohrung des Basisgehäuses axial geführt wird.

Vorteilhafterweise ist das Richtungswandlerelement als mindestens ein in einer Vertikalebene drehbarer und im Basisgehäuse gelagerter Hebel ausgebildet, wobei ein erster Hebelarm durch die Rückstellfeder in dauerndem druckübertragendem Eingriff mit der ersten Wälzrolle gehalten wird und ein zweiter Hebelarm mit der zweiten Wälzrolle in druckübertragenden Eingriff gebracht werden kann.

Das Richtungswandlerelement kann insbesondere als zwei in derselben Vertikalebene drehbare, senkrecht übereinander im Basisgehäuse gelagerte Hebel realisiert werden, welche durch ein Zweigelenk-Verbindungsglied in gemeinsamer Schwenkbewegung gekoppelt sind, wobei der erste Hebelarm einem ersten der zwei Hebel und der zweite Hebelarm einem zweiten der zwei Hebel zugehört.

In einer vorteilhaften Ausführungsform ist die Einrastfederklinke als ein am Basisgehäuse in unmittelbarer Nähe des Krafteinleitungselementes befestigtes Blattfederelement mit einer Einrastöffnung ausgebildet, wobei das Krafteinleitungselement einen vorstehenden Einraststift besitzt, welcher bei Erreichen der unteren Endstellung des Kraftelementes in die Einrastöffnung einschnappt.

Einzelheiten der erfindungsgemässen Türöffnungsvorrichtung ergeben sich anhand der Beschreibung des in den Zeichnungen dargestellten Ausführungsbeispiels. Es zeigen:
- Figur 1: eine Gesamtansicht eines Filterwägesystems mit der erfindungsgemässen Türöffnungsvorrichtung;
- Figur 1a: eine Filterwägedose mit Filter in schematischer Querschnittsdarstellung;
- Figur 2: die Waage mit der Türöffnungsvorrichtung in der geschlossenen Türposition;
- Figur 3: die Waage mit der Türöffnungsvorrichtung in der offenen Türposition;
- Figur 4: das für die automatisierte Filterwägung ausgelegte Windschutzgehäuse mit der durch die erfindungsgemässe Öffnungsvorrichtung verschiebbaren Türe in einer Explosionsdarstellung; und
- Figur 5: den Übertragungsmechanismus in Explosionsdarstellung.

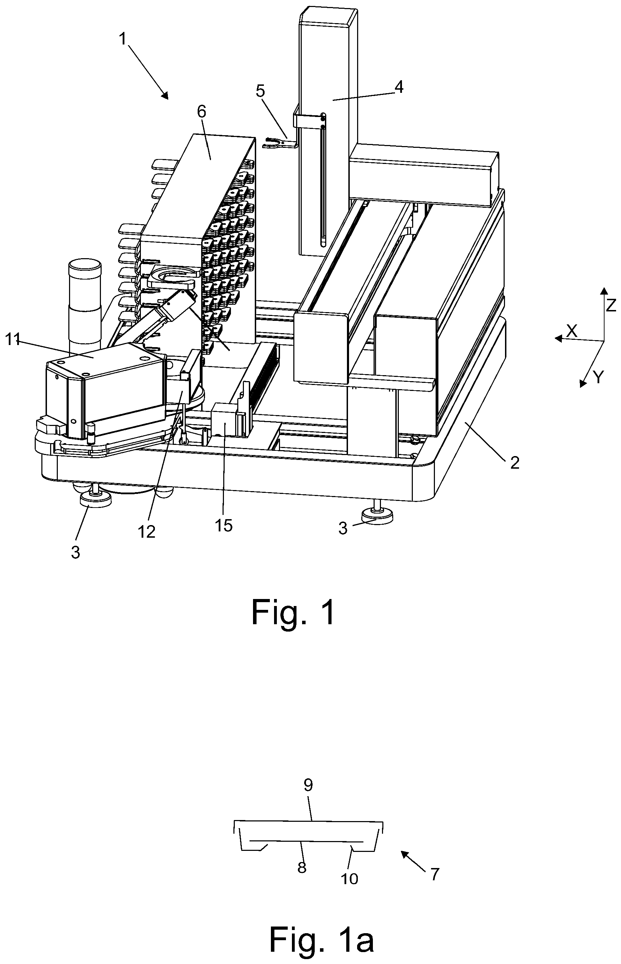

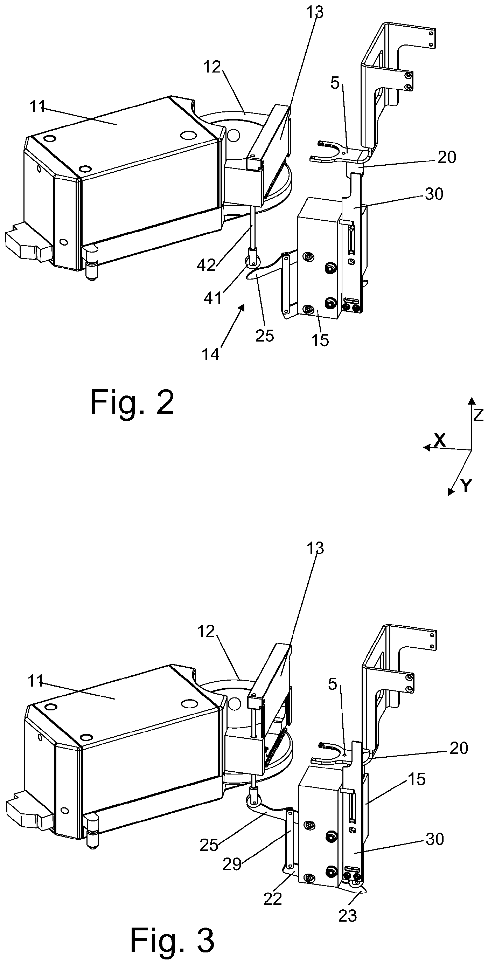

Figur 1 zeigt eine dreidimensionale Gesamtansicht eines mit der erfindungsgemässen Türöffnungsvorrichtung ausgestatteten Filterwägesystems 1, welches auf einer Grundplatte 2 mit Nivellierfüssen 3 angeordnet ist. Rechts im Bild erkennt man den Roboter 4 mit der in den kartesischen Koordinatenrichtungen X, Y, Z beweglichen Aufnahmegabel 5. Dem Roboter gegenüber ist das Magazingestell 6 angeordnet, welches die Filterwägedosen 7 mit den zu wägenden Filtern 8 (siehe Figur 1a) enthält. Im Vordergrund links ersichtlich ist die zur Grundplatte 2 diagonal angeordnete Mikrowaage 11 mit dem Windschutzgehäuse 12 und der vertikal beweglichen Windschutztüre 13, sowie rechts davon der Übertragungsmechanismus 15, welcher den Hauptteil der in den Figuren 2 bis 5 detailliert dargestellten Türöffnungsvorrichtung 14 darstellt.

In Figur 1a ist eine Filterwägedose 7 mit darin befindlichem Filter 8 dargestellt. Die Dose 7 ist mit einem Deckel 9 verschliessbar, und im Boden der Dose 7 befindet sich eine Öffnung 10. Das Filter 8, welches zuerst im Neuzustand vor Gebrauch und dann wieder im verschmutzten Zustand nach Gebrauch gewogen werden muss, wird z.B. mit einer Pinzette in die Dose 7 eingelegt, wo es sich infolge der konischen Wandform der Dose selbsttätig über der Öffnung 10 zentriert. Ein mit derart bestückten Filterdosen 7 gefülltes Magazingestell 6 wird in das Filterwägesystem 1 eingesetzt.

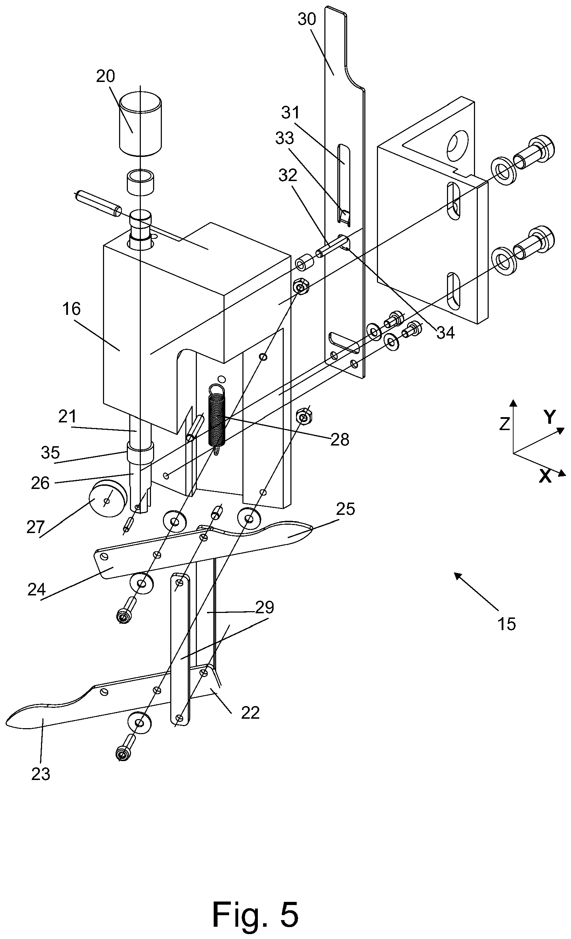

Die Figuren 2 und 3 zeigen die Mikrowaage 11 mit dem Windschutzgehäuse 12 sowie die Türöffnungsvorrichtung 14 mit dem Übertragungsmechanismus 15 in derselben Ausrichtung bezüglich der Roboterkoordinaten X, Y, Z wie in Figur 1. In Figur 2 befindet sich die Windschutztüre 13 in der geschlossenen Stellung und in Figur 3 in der geöffneten Stellung. Man erkennt die Aufnahmegabel 5, welche sich in Figur 2 über dem durch eine Federvorspannung des Übertragungsmechanismus 15 (Details siehe Figur 5) in seiner oberen Endstellung gehaltenen Druckstangenknauf 20 befindet, jedoch noch keinen Druck auf denselben ausübt.

Durch eine Abwärtsbewegung der Aufnahmegabel 5 wird der Druckstangenknauf 20 nach unten gedrückt (Figur 3), wodurch der erste Hebelarm 23 nach unten und der zweite Hebelarm 25 gleichzeitig nach oben bewegt wird. Der zweite Hebelarm 25 kommt zunächst mit der zweiten Wälzrolle 41 in Eingriff. Durch das weitere Absenken der Aufnahmegabel 5 wird der Druckstangenknauf 20 bis in die untere Endstellung bewegt, wo der Übertragungsmechanismus 14 durch Einschnappen eines Einraststiftes 32 (siehe Figur 5) in einer Einrastöffnung 34 der Einrastfederklinke 30 arretiert wird. Durch die Abwärtsbewegung des Druckstangenknaufes 20 wird die Windschutztüre 13 über den zweiten Hebelarm 25, die zweite Wälzrolle 41 und die zweite Druckstange 42 in die Offenstellung angehoben und durch den arretierten Übertragungsmechanismus 15 offengehalten.

Die Aufnahmegabel 5 kann nun vom Druckstangenknauf 20 entfernt werden, z.B. um eine soeben gewogene Filterwägedose 7 aus dem Windschutzgehäuse 12 zu holen oder eine zu wägende Filterwägedose 7 dort zu deponieren (hier nicht gezeigt).

Zum Schliessen der Windschutztüre 13 wird die Aufnahmegabel 5 zunächst in geringem Abstand über dem in seiner unteren Endstellung arretierten Druckstangenknauf 20 in Stellung gebracht. Durch kurzes seitliches Anstossen der Aufnahmegabel 5 an die Einrastfederklinke 30 wird die Arretierung gelöst. Der Druckstangenknauf 20 wird durch das Gewicht der Windschutztüre 13 sowie die Spannung der Rückstellfeder 28 nach oben gegen die Aufnahmegabel 5 gedrückt. Eine gesteuerte Aufwärtsbewegung der Aufnahmegabel 5 lässt den Übertragungsmechanismus 15 in die obere Endstellung des Druckstangenknaufes 20 zurückkehren, worauf die Aufnahmegabel 5 wieder für weitere Operationen zur Verfügung steht.

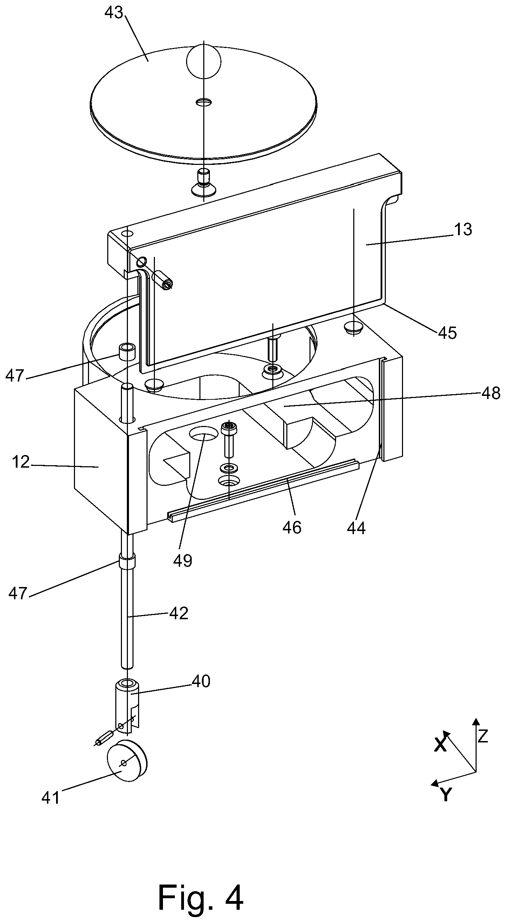

Figur 4 zeigt in Explosionsdarstellung eine bevorzugte Ausführungsform eines Windschutzgehäuses 12 mit abnehmbarem Deckel 43 und mit einer Windschutztüre 13, welche durch die erfindungsgemässe Türöffnungsvorrichtung 14 betätigbar ist. Zur Orientierung sind die in Figur 1 definierten Achsenrichtungen X, Y, Z eingezeichnet. Die Windschutztüre 13 ist in seitlichen Nuten 44 des Windschutzgehäuses 12 vertikal beweglich und luftzugdichtend geführt und greift im geschlossenen Zustand mit ihrer Unterkante 45 in eine ebenfalls luftzugdichtende Nut 46 ein. Als Türheberorgan dient die mit zweiten Gleitlagern 47 in einer Bohrung des Windschutzgehäuses 12 vertikal geführte zweite Druckstange 42, welche an ihrem oberen Ende mit der Windschutztüre 13 fest verbunden ist und an ihrem unteren Ende als Kraftangriffselement die in einer zweiten Radgabel 40 gelagerte zweite Wälzrolle 41 trägt. Im Innern des Windschutzgehäuses 12 erkennt man die U-förmige Ablagebank 48 für die Filterdosen 7 sowie die Durchführungsöffnung 49 für den Waagschalenträger (nicht abgebildet). Für die Wägung wird die Dose 7 über der Waagschale abgesenkt und auf die Ablagebank 48 gesetzt, wobei das Filter 8 durch die Waagschale vom Dosenboden abgehoben wird. Das Filter 8 wird für die Wägung (und während der gesamten Aufenthaltsdauer im Filterwägesystem 1) nicht aus der Dose 7 herausgenommen.

Figur 5 zeigt die Einzelheiten des Übertragungsmechanismus 15 in einer Explosionsdarstellung. Zur Orientierung sind auch hier die in Figur 1 definierten Achsenrichtungen X, Y, Z eingezeichnet. Die mit dem Druckstangenknauf 20 verbundene erste Druckstange 21 ist senkrecht gleitend in einer Bohrung des Basisgehäuses 16 geführt und trägt an ihrem unteren Ende eine in einer ersten Radgabel 26 gelagerte erste Wälzrolle 27. Der am Basisgehäuse 16 gelagerte erste Hebel 22 wird durch die am Basisgehäuse 16 befestigte Rückstellfeder gegen die erste Wälzrolle 27 vorgespannt und ist über das Koppelglied 29 mit dem ebenfalls am Basisgehäuse 16 gelagerten zweiten Hebel 24 verbunden, welcher seinerseits durch Eingriff des zweiten Hebelarms 25 mit der zweiten Wälzrolle 41 über die zweite Druckstange 42 auf die Windschutztüre 13 wirkt.

Im abgebildeten Beispiel ist die Einrastfederklinke 30 als ein am Basisgehäuse 16 befestigtes Blattfederelement 30 ausgebildet. Wenn der Druckstangenknauf 20 durch die Aufnahmegabel 5 nach unten gedrückt wird, bewegt sich der mit der ersten Druckstange 21 verbundene und die Ausnehmung 31 der Blattfeder 30 durchsetzende Einraststift 32 nach unten, drückt das Blattfederelement 30 durch Gleitkontakt mit der schräg abgebogenen Zunge 33 vom Basisgehäuse weg und kommt schliesslich zum Einschnappen in der Einrastöffnung 34.

Obwohl die Erfindung durch die Darstellung des spezifischen Beispiels der Filterwägung beschrieben worden ist, ist es offensichtlich, dass die Erfindung auch in Wägerobotersystemen für andere Anwendungen verwendbar ist und dass zahlreiche weitere Ausführungsvarianten in Kenntnis der vorliegenden Erfindung geschaffen werden können, beispielsweise indem anstelle des durch ein Koppelglied verbundenen ersten und zweiten Hebels ein einziger Hebel verwendet wird, oder indem die Hebelübertragung z.B. durch einen Zahnradmechanismus oder ein Bowdenkabel ersetzt wird. Auch ist die Anwendbarkeit der Erfindung ausdrücklich nicht auf ein kartesisches XYZ-Robotersystem beschränkt. Eine erfindungsgemässe Türöffnungsvorrichtung kann z.B. auch mit einem in zylindrischen oder sphärischen Polarkoordinaten programmierbaren Schwenkarmroboter zusammenarbeiten. Es versteht sich, dass derartige Ausführungsvarianten durchaus als im Rahmen der Erfindung liegend zu betrachten sind.

**Bezugszeichenliste**

| | |
|---|---|
| 1 | Filterwägesystem |
| 2 | Grundplatte |
| 3 | Nivellierfüsse |
| 4 | Roboter |
| 5 | Aufnahmegabel |
| 6 | Magazingestell |
| 7 | Filterwägedose |
| 8 | Filter |
| 9 | Deckel von 7 |
| 10 | Öffnung im Boden von 7 |
| 11 | Mikrowaage |
| 12 | Windschutzgehäuse |
| 13 | Windschutztüre |
| 14 | Türöffnungsvorrichtung |
| 15 | Übertragungsmechanismus |
| 16 | Basisgehäuse |
| 20 | Druckstangenknauf |
| 21 | erste Druckstange |
| 22 | erster Hebel |
| 23 | erster Hebelarm |
| 24 | zweiter Hebel |
| 25 | zweiter Hebelarm |
| 26 | erste Radgabel |
| 27 | erste Wälzrolle |
| 28 | Rückstellfeder |
| 29 | Koppelglied |
| 30 | Einrastfederklinke, Blattfederelement |
| 31 | Ausnehmung von 30 |
| 32 | Einraststift |
| 33 | Zunge von 30 |
| 34 | Einrastöffnung |
| 35 | erstes Gleitlager |
| 40 | Zweite Radgabel |
| 41 | zweite Wälzrolle |
| 42 | zweite Druckstange |
| 43 | Deckel des Windschutzgehäuses 12 |
| 44 | seitliche Führungsnuten |
| 45 | Unterkante der Windschutztüre 13 |
| 46 | Dichtungsnut |
| 47 | Zweites Gleitlager |
| 48 | U-förmige Ablagebank |
| 49 | Durchführungsöffnung |
| | |
| X, Y, Z | Kartesische Koordinatenrichtungen |

## Patentansprüche

1. Türöffnungsvorrichtung (14) für ein Waagenwindschutzgehäuse (12) einer Waage (11) mit vertikaler Beschickungsöffnung und mit einer vertikal verschiebbaren, die Beschickungsöffnung in der angehobenen Türposition freigebenden und in der abgesenkten Türposition verschliessenden Windschutztüre (13), **dadurch gekennzeichnet, dass** die Türöffnungsvorrichtung (14) durch mechanische Einwirkung einer Aufnahmegabel (5) eines Roboters (4) betätigbar ist, und ferner **gekennzeichnet durch** ein mit der Türe (13) verbundenes Türheberorgan (40, 41, 42) mit einem Kraftangriffselement (41) für eine vertikal aufwärts gerichtete, das Öffnen der Türe (13) bewirkende Betätigungskraft, sowie **durch** einen von der Waage (11) freistehenden Übertragungsmechanismus (15), welcher ein durch Einwirkung der Aufnahmegabel (5) vertikal zwischen einer oberen und einer unteren Endposition bewegliches Krafteinleitungselement (20, 21, 26, 27), mindestens ein an das Krafteinleitungselement (20, 21, 26, 27) gekoppeltes und mit dem Kraftangriffselement (41) koppelbares Richtungswandlerelement (22, 23, 24, 25, 29), eine das Krafteinleitungselement (20, 21, 26, 27) in die obere Endposition ziehende Rückstellfeder (28), und eine das Krafteinleitungselement (20, 21, 26, 27) in der unteren Endposition arretierende Einrastfederklinke (30) aufweist.

2. Türöffnungsvorrichtung (14) nach Anspruch 1, **dadurch gekennzeichnet, dass** das Krafteinleitungselement (20, 21, 26, 27) zum Öffnen der Windschutztüre (13) durch die Aufnahmegabel (5) gegen eine Rückstellkraft der Rückstellfeder (28) nach unten drückbar ist, wodurch über das Richtungswandlerelement (22, 23, 24, 25, 29) ein Kraftschluss mit dem Kraftangriffselement (41) herstellbar ist, womit die das Öffnen der Türe (13) bewirkende nach oben gerichtete Betätigungskraft erzeugbar ist, und ferner dass beim Erreichen der geöffneten Türposition der Übertragungsmechanismus (15) durch das Einschnappen der Einrastfederklinke (30) arretiertierbar ist.

3. Türöffnungsvorrichtung (14) nach Anspruch 1 oder 2, **dadurch gekennzeichnet, dass** zum Schliessen der Windschutztüre (13) die Aufnahmegabel (5) über dem Krafteinleitungselement in Stellung gebracht und die Arretierung des Übertragungsmechanismus (15) durch seitliche Druckwirkung der Aufnahmegabel (5) auf die Einrastfederklinke (30) lösbar ist, dass demzufolge das von der Arretierung befreite Krafteinleitungselement (20, 21, 26, 27) durch das auf das Richtungswandlerelement (22, 23, 24, 25, 29) wirkende Gewicht der Windschutztüre (13) nach oben gegen die Aufnahmegabel (5) drückbar ist und die Windschutztüre (13) sich durch ihr Eigengewicht mit einer durch den Roboter kontrollierten Geschwindigkeit in die geschlossene Position bewegbar ist, und ferner dass nach Erreichen der geschlossenen Position der Windschutztüre (13) das Krafteinleitungselement (20, 21, 26, 27) durch die Rückstellfeder (28) vollends in die obere Endposition zurückziehbar und demzufolge der Eingriff zwischen dem Richtungswandlerelement (22, 23, 24, 25, 29) und dem Kraftangriffselement (41) lösbar ist.

4. Türöffnungsvorrichtung (14) nach einem der Ansprüche 1 bis 3, **dadurch gekennzeichnet, dass** das mit der Windschutztüre (13) verbundene Türheberorgan (40, 41, 42) eine senkrecht ausgerichtete zweite Druckstange (42) ist, welche an ihrem unteren Ende als Kraftangriffselement eine in einer zweiten Radgabel (40) gelagerte zweite Wälzrolle (41) trägt und mittels zweiten Gleitlagern (47) in einer senkrechten Bohrung des Windschutzgehäuses (12) axial geführt ist.

5. Türöffnungsvorrichtung (14) nach einem der Ansprüche 1 bis 4, **dadurch gekennzeichnet, dass** der Übertragungsmechanismus (15) ein Basisgehäuse (16) aufweist und dass das Krafteinleitungselement (20, 21, 26, 27) als senkrecht ausgerichtete erste Druckstange (21) ausgebildet ist, welche an ihrem oberen Ende einen durch die Aufnahmegabel (5) beaufschlagbaren Knauf und an ihrem unteren Ende eine in einer ersten Radgabel (26) gelagerte erste Wälzrolle (27) trägt und mittels ersten Gleitlagern (35) in einer senkrechten Bohrung des Basisgehäuses (16) axial geführt ist.

6. Türöffnungsvorrichtung (14) nach einem der Ansprüche 1 bis 5, **dadurch gekennzeichnet, dass** das Richtungswandlerelement (22, 23, 24, 25, 29) als mindestens ein in einer Vertikalebene drehbarer und im Basisgehäuse (16) gelagerter Hebel (22, 24) ausgebildet ist, wobei ein erster Hebelarm (23) durch die Rückstellfeder (28) in dauerndem druckübertragendem Eingriff mit der ersten Wälzrolle (27) gehalten wird und ein zweiter Hebelarm (25) in druckübertragenden Eingriff mit der zweiten Wälzrolle (41) bringbar ist.

7. Türöffnungsvorrichtung (14) nach einem der Ansprüche 1 bis 6, **dadurch gekennzeichnet, dass** das Richtungswandlerelement (22, 23, 24, 25, 29) zwei in derselben Vertikalebene drehbare, senkrecht übereinander im Basisgehäuse (16) gelagerte Hebel (22, 24) umfasst, welche durch ein Zweigelenk-Verbindungsglied (29) in gemeinsamer Schwenkbewegung gekoppelt sind, wobei der erste Hebelarm (23) einem ersten der zwei Hebel (22, 24) und der zweite Hebelarm (25) einem zweiten der zwei Hebel (22, 24) zugehört.

8. Türöffnungsvorrichtung (14) nach einem der Ansprüche 1 bis 7, **dadurch gekennzeichnet, dass** die Einrastfederklinke (30) als ein am Basisgehäuse (16) in unmittelbarer Nähe des Krafteinleitungselementes (20, 21, 26, 27) befestigtes Blattfederelement (30) mit einer Einrastöffnung (34) ausgebildet ist, wobei das Krafteinleitungselement (20, 21, 26, 27) einen vorstehenden Einraststift (32) aufweist, welcher bei Erreichen der unteren Endstellung des Krafteinleitungselementes (20, 21, 26, 27) in die Einrastöffnung (34) einschnappt.

9. Verfahren zur Betätigung einer Türöffnungsvorrichtung (14) nach einem der Ansprüche 1 bis 8, **dadurch gekennzeichnet, dass** das Verfahren mit einem Roboter (4) implementierbar ist und dass die Betätigung durch rein mechanische Einwirkung einer Aufnahmegabel (5) des Roboters (4) auf Betätigungselemente (20, 30) der Türöffnungsvorrichtung (14) erfolgt.

10. Verfahren gemäss Anspruch 9, **dadurch gekennzeichnet, dass** der Roboter (4) ein kartescher XYZ-Roboter ist.

11. Verfahren gemäss Anspruch 9, **dadurch gekennzeichnet, dass** der Roboter (4) ein Schwenkarmroboter ist.

12. Verfahren gemäss Anspruch 9, **dadurch gekennzeichnet, dass** die Betätigung der Türöffnungsvorrichtung (14) eine Öffnungsphase und eine Schliessphase umfasst, wobei in der Öffnungsphase die Aufnahmegabel (5) in eine Position unmittelbar oberhalb des in seiner oberen Endstellung befindlichen Druckstangenknaufs (20) bewegt wird und daraufhin der Druckstangenknauf (20) durch senkrechte Abwärtsverschiebung der Aufnahmegabel (5) bis zum Einschnappen einer Arretiervorrichtung (30, 31, 32, 33, 34) nach unten gedrückt wird, wobei die Windschutztüre (13) angehoben und durch die Arretierung offen gehalten wird;
und wobei in der Schliessphase die Aufnahmegabel (5) in eine Position unmittelbar oberhalb des in seiner unteren Endstellung arretierten Druckstangenknaufs (20) gefahren wird und von dort seitlich gegen die Einrastfederklinke gedrückt wird, wodurch sich die Arretierung löst und der ganze Türöffnungsmechanismus (14) under dem Eigengewicht der Windschutztüre (13) und der Spannung der Rückstellfeder (28) in einer durch die Auflagegabel (5) gebremsten Bewegung in die obere Endstellung des Druckstangenknaufs (20) zurückkehrt.

13. Verfahren gemäss Anspruch 12, **dadurch gekennzeichnet, dass** die Abwärtsbewegung der auf den Druckstangenknauf (20) drückenden Aufnahmegabel (5) während der Öffnungsphase auch ausführbar ist, während die Aufnahmegabel (5) eine Filterwägedose (7) trägt.

14. Verfahren gemäss Anspruch 12, **dadurch gekennzeichnet, dass** die seitliche Bewegung gegen die Einrastfederklinke (30) und die Aufwärtsbewegung der den Druckstangenknauf (20) bremsenden Aufnahmegabel (5) während der Schliessphase auch ausführbar sind, während die Aufnahmegabel (5) eine Filterwägedose (7) trägt.

## Claims

1. Door-opening device (14) for a draft shield enclosure (12) of a balance (11) with a vertical loading-access opening and with a vertically movable draft shield door (13) which in the raised position sets the access opening free and in the lowered position closes it up, **characterized in that** the door-opening device (14) is designed to be operated through mechanical actuation by a carrier fork (5) of a robot (4), and further **characterized in that** the door-opening device (14) comprises a door-lifter (40, 41, 42) which is connected to the door (13) and includes a force-application element (41) for an upward-directed vertical force which causes the door (13) to open and further comprises a transmitting mechanism (15) that stands clear of the balance (11) and includes a force-receiving element (20, 21, 26, 27) which, through the action of the carrier fork (5), is vertically movable between an upper and a lower end position, and that the door-opening device (14) also comprises at least one direction-reversing element (22, 23, 24, 25, 29) that is coupled to the force-receiving element (20, 21, 26, 27) and can be coupled to the force-application element (41), a return spring (28) that pulls the force-receiving element (20, 21, 26, 27) into the upper end position, as well as a spring-biased locking latch (30) which arrests the force-receiving element (20, 21, 26, 27) in the lower end position.

2. Door-opening device (14) according to claim 1, **characterized in that** the draft shield door (13) is designed to be opened by the carrier fork (5) pushing the force-receiving element (20, 21, 26, 27) downward against a resetting force of the return spring (28), whereby a force-transmitting connection is established by way of the direction-reversing element (22, 23, 24, 25, 29) to the force-application element (41) and the upward-directed actuating force is generated which causes the door (13) to open and, when the fully open position of the door has been attained, the transmitting mechanism (30) is arrested as the spring-biased locking latch (30) snaps shut.

3. Door-opening device (14) according to claim 1 or 2, **characterized in that** the draft shield door (13) is designed to be closed by the carrier fork (5) being moved into position above the force-receiving element (20, 21, 26, 27) and pushing sideways against the spring-biased locking latch (30), whereby the arrestment of the transmitting mechanism (15) is released, and that as the force-receiving element (20, 21, 26, 27) is released from arrestment, it is pushed upward against the carrier fork (5) by the weight of the draft shield door (13) acting on the direction-reversing element (22, 23, 24, 25, 29), whereupon the draft shield door (13) returns under its own weight to the closed position at a speed that is controlled by the robot, and further that after the draft shield door (13) has reached the closed position, the return spring (28) fully retracts the force-receiving element (20, 21, 26, 27) into the upper end position, whereby the engagement between the direction-reversing element (22, 23, 24, 25, 29) and the force-application element (41) is released.

4. Door-opening device (14) according to one of the claims 1 to 3, **characterized in that** the door lifter (40, 41, 42) which is connected to the draft shield door (13) comprises a vertically directed second push rod (42) which is axially guided by second glide bushings (47) in a vertical bore of the draft shield enclosure (12) and which carries at its lower end a second wheel fork (40) with a second roller wheel (41) as force-application element.

5. Door-opening device (14) according to one of the claims 1 to 4, **characterized in that** the transmitting mechanism (15) comprises a chassis base (16) and that the force-receiving element (20, 21, 26, 27) is configured as a vertically oriented first push rod (21) which is axially guided by first glide bushings (35) in a vertical bore of the chassis base (16), and which carries at its upper end a push knob against which the carrier fork (5) can exert a force and at its lower end a first roller wheel (27) mounted in a first wheel fork (26).

6. Door-opening device (14) according to one of the claims 1 to 5, **characterized in that** the direction-reversing element (22, 23, 24, 25, 29) is configured as at least one lever (22, 24) which is mounted in the chassis base (16) and is rotatable in a vertical plane of movement, with a first lever arm (23) being held by the return spring (28) in permanent pressure-transmitting engagement with the first roller wheel (27), while a second lever arm (25) can be brought into pressure-transmitting engagement with the second roller wheel (41).

7. Door-opening device (14) according to one of the claims 1 to 6, **characterized in that** the direction-reversing element (22, 23, 24, 25, 29) comprises two levers (22, 24) that are mounted in the chassis base (16) vertically above each other and are coupled to each other by a coupling member (29) constraining the two levers (22, 24) to swing up and down together, wherein the first lever arm (23) belongs to a first of the two levers (22, 24) and the second lever arm (25) belongs to the second of the two levers (22, 24).

8. Door-opening device (14) according to one of the claims 1 to 6, **characterized in that** the spring-biased locking latch (30) is configured as a leaf spring element (30) which is fastened to the chassis base (16) in the immediate vicinity of the force-receiving element (20, 21, 26, 27), wherein the leaf spring element has a catch opening (34) and the force-receiving element (20, 21, 26, 27) has a projecting latch pin (32) which snaps into the catch opening (34) when the force-receiving element (20, 21, 26, 27) arrives at its lower end position.

9. Method of operating a door-opening device (14) according to one of the claims 1 to 8, **characterized in that** the method is designed for implementation with a robot (4), wherein the actuation of the door-opening device (14) is effected through purely mechanical action of a carrier fork (5) of the robot (4) directed at actuating elements (20, 30) of the door-opening device (14).

10. Method according to claim 9, **characterized in that** the robot (4) is a Cartesian XYZ-robot.

11. Method according to claim 9, **characterized in that** the robot (4) is a swivel arm robot.

12. Method according to claim 9, **characterized in that** the actuation of the door-opening device (14) comprises an opening phase and a closing phase, wherein in the opening phase the carrier fork (5) is moved into a position immediately above the push knob (20) while the latter is in its upper end position, whereupon the push knob (20), by a vertical downward movement of the carrier fork (5), is pushed down to a point where an arrestment device (30, 31, 32, 33, 34) snaps into lock, whereby the draft shield door (13) is raised and is held open by the arrestment,
and wherein in the closing phase the carrier fork (5) is moved into a position immediately above the push knob (20) while the latter is locked in its lower end position by the arrestment, and the carrier fork (5) is pushed laterally against the spring-biased locking latch, whereby the arrestment is released and the entire door-opening mechanism (14) returns to the upper end position of the push knob (20) in a movement that is propelled by the weight of the draft shield door (13) and the tensile force of the return spring (28) and braked by the carrier fork (5).

13. Method according to claim 12, **characterized in that** the downward movement of the carrier fork (5) pressing against the push knob (20) during the opening phase can also be executed while the carrier fork (5) is holding a filter-weighing receptacle (7).

14. Method according to claim 12, **characterized in that** the lateral movement of the carrier fork (5) pushing against the spring-biased locking latch (30) and the upward movement of the carrier fork (5) braking the return of the push knob (20) during the closing phase can also be executed while the carrier fork (5) is holding a filter-weighing receptacle (7).

## Revendications

1. Dispositif d'ouverture de porte (14) pour un carter de pare-vent de balance (12) d'une balance (11) avec une ouverture d'alimentation verticale et avec une porte de pare-vent (13) déplacée verticalement, obturant l'ouverture d'alimentation dans la position de porte abaissée, débloquant l'ouverture d'alimentation dans la position de porte levée, **caractérisé en ce que** le dispositif d'ouverture de porte (14) peut être actionné par l'action mécanique d'une fourche de réception (5) d'un robot (4) et **caractérisé en outre par** un organe de levage (40, 41 ,42) relié à la porte (13), comportant un élément d'application de force (41) pour une force d'actionnement provoquant l'ouverture de la porte (13), alignée verticalement vers le haut avec un élément d'application de force (41), ainsi que par un mécanisme de transmission (15) découvrant la balance (11), qui présente un élément d'induction de force (20, 21, 26, 27) mobile verticalement entre une position finale supérieure et une position finale inférieure sous l'action de la fourche de réception (5), au moins un élément de variateur de direction (22, 23, 24, 25, 29) couplé à l'élément d'induction de force (20, 21, 26, 27) et pouvant être couplé à l'élément d'application de force (41), un ressort de rappel (28) tirant l'élément d'induction de force (20, 21, 26, 27) dans la position finale supérieure et un cliquet de ressort d'encliquetage (30) arrêtant l'élément d'induction de force (20, 21, 26, 27) dans la position finale inférieure.

2. Dispositif d'ouverture de porte (14) selon la revendication 1, **caractérisé en ce que** le dispositif d'induction de force (20, 21, 26, 27) pour ouvrir la porte de pare-vent (13) peut être pressé vers le bas par la fourche de réception (5) en sens inverse à une force de rappel du ressort de rappel (28), moyennant quoi par l'intermédiaire de l'élément variateur de direction (22, 23, 24, 25, 29) une complémentarité de force avec l'élément d'application de force (41) peut être établie, avec laquelle la force d'actionnement orientée vers le haut, provoquant l'ouverture de la porte (13) peut être produite, et en outre lorsque la position de porte ouverte est atteinte le mécanisme de transmission (15) peut être arrêté par l'enclenchement du cliquet de ressort d'encliquetage (30).

3. Dispositif d'ouverture de porte (14) selon la revendication 1 ou 2, **caractérisé en ce que** pour fermer la porte de pare-vent (13) la fourche de réception (5) est amenée en position par l'intermédiaire de l'élément d'induction de force et la butée du mécanisme de transmission (15) peut être annulée par l'action de force latérale de la fourche de réception (5) sur le cliquet de ressort d'encliquetage (30), **en ce que** par conséquent l'élément d'induction de force (20, 21, 26, 27) débloqué par la butée peut être pressé par le poids agissant sur l'élément variateur de direction (22, 23, 24, 25, 29) de la porte de pare-vent (13) vers le haut contre la fourche de réception (5) et la porte de pare-vent (13) est déplaçable par son propre poids avec une vitesse commandée par le robot dans la position fermée, et en outre **en ce que** après que la position fermée de la porte de pare-vent (13) est atteinte, l'élément d'induction de force (20, 21, 26, 27) peut être repoussé dans la position finale supérieure en totalité par le ressort de rappel (28) et peut être débloqué en conséquence de la mise en prise entre l'élément variateur de direction (22, 23, 24, 25, 29) et l'élément d'application de force (41).

4. Dispositif d'ouverture de porte (14) selon une des revendications 1 à 3, **caractérisé en ce que** l'organe de levage de porte (40, 41, 42) relié à la porte de pare-vent (13) est une deuxième tige de pression (42) orientée perpendiculairement, qui supporte sur son extrémité inférieure comme élément d'application de force un deuxième galet de roulement (41) positionné dans une deuxième fourche de roue (40) et est guidé axialement au moyen de deuxièmes paliers lisses (47) dans un alésage perpendiculaire du carter de pare-vent (12).

5. Dispositif d'ouverture de porte (14) selon une des revendications 1 à 4, **caractérisé en ce que** le mécanisme de transmission (15) présente un carter de base (16) et **en ce que** l'élément d'induction de force (20, 21, 26, 27) est conçu comme une première tige de pression (21) orientée perpendiculairement, qui supporte à son extrémité supérieure une poignée sollicitée par la fourche de réception (5) et à son extrémité inférieure un premier galet de roulement (27) positionné dans une première fourche de roue (26), et est guidé axialement au moyen de premiers paliers lisses (35) dans un alésage perpendiculaire au carter de base (16).

6. Dispositif d'ouverture de porte (14) selon une des revendications 1 à 5, **caractérisé en ce que** l'élément variateur de direction (22, 23, 24, 25, 29) est conçu comme au moins un levier (22, 24) positionné dans le carter de base (16) et rotatif dans un plan vertical, dans lequel un premier bras de levier (23) est maintenu par le ressort de rappel (28) dans une mise en prise à transmission de pression durable avec le premier galet de roulement (27) et un deuxième bras de levier (25) peut être amené en mise en prise à transmission de pression avec le deuxième galet de roulement (41).

7. Dispositif d'ouverture de porte (14) selon une des revendications 1 à 6, **caractérisé en ce que** l'élément variateur de direction (22, 23, 24, 25, 29) comprend deux leviers (22, 24) positionnés perpendiculairement l'un à l'autre dans le carter de base (16), rotatifs dans le même plan vertical, qui sont couplés par l'intermédiaire d'un organe de liaison à double articulation (29) dans un mouvement de pivotement commun, dans lequel le premier bras de levier (23) appartient à un premier des deux leviers (22,24) et le deuxième bras de levier (25) appartient au deuxième des deux leviers (22, 24).

8. Dispositif d'ouverture de porte (14) selon une des revendications 1 à 7, **caractérisé en ce que** le cliquet de ressort d'encliquetage (30) est conçu comme un élément de ressort à feuilles (30) avec une ouverture d'encliquetage (34) fixé sur le carter de base (16) à proximité immédiate de l'élément d'induction de force (20, 21, 26, 27), dans lequel l'élément d'induction de force (20, 21, 26, 27) présente une goupille d'encliquetage en saillie (32), qui s'enclenche lorsque la position finale inférieure de l'élément d'induction de force (20, 21, 26, 27) est atteinte dans l'ouverture d'encliquetage (34) .

9. Procédé d'actionnement d'un dispositif d'ouverture de porte (14) selon une des revendications 1 à 8, **caractérisé en ce que** le procédé peut être implémenté avec un robot (4) et **en ce que** l'actionnement est effectué via l'action purement mécanique d'une fourche de réception (5) du robot (4) sur les éléments d'actionnement (20, 30) du dispositif d'ouverture de porte (14).

10. Procédé selon la revendication 9, caractérisé n ce que le robot (4) est un robot XYZ Kartesch.

11. Procédé selon la revendication 9, caractérisé e ce que le robot (4) est un robot à bras pivotant.

12. Procédé selon la revendication 9, **caractérisé en ce que** l'actionnement du dispositif d'ouverture de porte (14) comprend une phase d'ouverture et une phase de fermeture, dans lequel dans la phase d'ouverture la fourche de réception (5) est déplacée dans une position directement au-dessus de la poignée de tige de pression (20) se trouvant dans sa position finale supérieure et ensuite la poignée de tige de pression (20) est pressée vers le bas par un déplacement vers le bas perpendiculaire de la fourche de réception (5) jusqu'à l'encliquetage d'un dispositif de butée (30, 31, 32, 33, 34), moyennant quoi la porte de pare-vent (13) est levée et maintenue ouverte par la butée ;
et dans lequel dans la phase de fermeture la fourche de réception (5) est déplacée dans une position directement au-dessus de la poignée de tige de pression (20) arrêtée dans sa position finale inférieure et y est pressée latéralement contre le cliquet de ressort d'encliquetage, moyennant quoi la butée se débloque et le mécanisme d'ouverture de porte total (14) revient dans la position finale supérieure de la poignée de tige de pression (20) sous le poids propre de la porte de pare-vent (13) et la tension du ressort de rappel (28) dans un mouvement freiné par la fourche de réception (5).

13. Procédé selon la revendication 12, **caractérisé en ce que** le mouvement vers le bas de la fourche de réception (5) pressant sur la poignée de tige de pression (20) peut aussi être exécuté pendant la phase d'ouverture, alors que la fourche de réception (5) supporte une cellule de pesée de filtre (7).

14. Procédé selon la revendication 12, **caractérisé en ce que** le mouvement latéral contre le cliquet de ressort d'encliquetage (30) et le mouvement vers le bas de la fourche de réception (5) freinant la poignée de tige de pression (20) peuvent aussi être exécutés pendant la phase de fermeture, alors que la fourche de réception (5) supporte une cellule de pesée de filtre (7) .
